# EUROPEAN PATENT APPLICATION

(11) **EP 2 991 295 A1**
(43) Date of publication of application: **02.03.2016**
(21) Application number: 14306323.8
(22) Date of filing: 27.08.2014
(51) Int. Cl.: H04L 12/911, H04L 12/863

(54) **System and method for handling data flows in an access network**

(71) Applicant: ALCATEL LUCENT, 92100 Boulogne-Billancourt (FR)
(72) Inventor: Kozicki, Bartlomiej, 2018 Antwerpen (BE); Tsiaflakis, Paschalis, 2018 Antwerpen (BE)
(74) Representative: D'Halleweyn, Nele Veerle Trees Gertrudis

(57) **Abstract**

A system for handling data flows, consisting of data packets, in an access network between at least one provider and a plurality of users, comprising:
an information collecting unit configured for collecting information about data flows, which are to be established between said at least one provider and at least one user; a classifying unit configured for classifying data packets within the data flows in at least two classes, based on content type; a priority assigning unit configured for assigning at least one of a higher and a lower priority to data packets within at least one of the first and second classes, based on at least one user related property for each data packet destined to at least one user; an allocation unit configured for allocating data carrying capacity of said user line, based on the assigned priority of the data packets to be sent over said user line.

## Description

### Field of Invention

Embodiments of the invention relate to the field of data flows in an access network, and in particular to systems and methods for handling data flows, consisting of data packets, in an access network.

### Background

Broadband access networks are typically deployed as triple play offers (voice, managed video, high speed Internet). In that model, latency sensitive voice and IPTV video services, requiring high sustained bandwidth, are delivered over managed tunnels such as e.g. virtual local area networks (VLANs) and are handled in access equipment with strict priority. The remaining capacity in the access link is devoted to best effort services with no or at best lower bandwidth or latency assurance. However, an increasing number of services such as real-time communications or unicast video is being delivered in the best effort manner as the so-called over-the-top traffic. Although, to the end user, these may be paid (premium) services, they are - in known systems - not being handled in prioritized fashion. Consequently, in the presence of other best effort traffic, these premium services will experience blocking and excessive delays, in contrast with expectations of the users, based on promises from the access providers.

Current solutions for delivering unicast video service in the over-the-top manner involve multilayer encoding of the video stream and distribution of video chunks, with quality corresponding to the prevailing network conditions (e.g. congestion state). The client requesting video chunks buffers a portion of video to ensure smooth playback. These techniques, however, cannot be used for real-time communication, virtual desktop applications or interactive video as the latency incurred by buffering cannot be tolerated for such applications.

### Summary

The object of embodiments of the invention is to provide a system and a method for improved data handling, allowing the occurring latency in over-the-top traffic, especially in traffic related to premium services, to be reduced to the extent that the aforementioned and/or other applications can be delivered more smoothly.

According to a first aspect of the invention there is provided a system for handling data flows, consisting of data packets, in an access network between at least one provider and a plurality of users. The system comprises an information collecting unit configured for collecting information about data flows, which are to be established between said at least one provider and at least one user of said plurality of users, and a classifying unit configured for classifying data packets within the data flows in at least two classes of data packets, based on content type. The system further comprises a priority assigning unit configured for assigning at least one of a higher and a lower priority to data packets within one or both of the first and second classes of data packets, based on at least one user related property for each data packet destined to at least one user of the plurality of users. Finally, the system comprises an allocation unit configured for allocating data carrying capacity of the user line, based on the assigned priority of the data packets that are to be sent over the user line.

Embodiments of the invention are based *inter alia* on the inventive insight that in order to address the low-latency requirements of premium traffic, information about the premium traffic directed to the user can be used to influence the operation of the allocation unit, which can for example be comprised in the remote node's multiline transceiver unit (MTU). This unit can further consist of transceivers of all connected user lines, a management entity (ME) and a vectoring control entity (VCE). The allocation unit can be a dynamic resources allocation (DRA) element, which can dynamically allocate bandwidths to the access last mile users. In order to identify the premium traffic, incoming traffic can be treated as a flow and information about that flow can be gathered in the information collecting unit, which acts as a centralized controller. This information is then used to instruct the allocation unit to prioritize or expedite the delivery of traffic determined to be the premium traffic over the particular carrying line, compared to lines which do not carry premium traffic. Moreover, this approach can ensure that the premium traffic is handled preferentially or at least with a higher priority, over other best effort traffic, by identifying the requirements of the corresponding data packets, based on the type of data, and further also based on properties related to the user for whom the data is intended.

According to an embodiment, the system further comprises a scheduling unit which is configured for scheduling the data packets from different classes, according to predetermined scheduling rules, into one first-in-first-out queue per corresponding user line. The scheduling rules can for example use strict priority (SP) and/or weighted round robin (WRR) algorithms.

According to an embodiment, the information collecting unit is further configured for analyzing headers of data packets within the data flows and acquiring therefrom information which is representative for connection and quality requirements of the data flows. Based on these requirements, a data path can easily be established through the access and aggregation network, for forwarding the data flows to end users, also referred to as last mile users.

According a further embodiment, the information which is representative for connection and quality requirements of the data flows comprises content type, source and destination of the data packets within the data flows. Source and destination data are used to identify for example which provider the data is originating from, and which user/customer the data is meant for. The content type information will allow for a first classification of the data. Data can for example be classified as video, text, audio, etc. This classification can be a stepping stone towards assigning a first priority to the data flows, where video would receive a higher priority compared to text because of higher requirements considering bandwidth and bitrate. Another classification based on content type could be the distinction between data that is part of a triple play offer, such as IPTV video or voice, and data that is part of best effort services. This would allow for a distinction to be made between managed services traffic and best effort traffic.

According to another embodiment of the invention, the system further comprises a look-up unit, configured for looking up user related properties such as subscription type or user specific policy, based on at least one of the content type, the source and the destination of the data packets. Based on the user for whom a data packet is meant, and the provider from whom the data packet originates, information regarding the subscription type of that particular user could be looked-up in an available table, that for example contains user subscription types per provider. In a further embodiment, a policy for handling traffic, delivered to a certain user, can be obtained through a policy and charging rules function (PCRF).
Data packets within one class have the same content type. There could for example be a class for triple play offered voice and IPTV video services, and a class for best effort services. Now within one class, data packets can be assigned a higher or a lower priority, which is based on for example the subscription type of the user for whom the data packet is intended. By using this approach, data packets intended for premium users (who pay a higher monthly fee) will be treated in prioritized fashion with respect to data packets intended for normal users (who pay a lower monthly fee).

According to another embodiment, the allocating unit is further configured for modifying upstream/downstream bandwidth ratio such that delivery of high priority data packets to an according user of said plurality of users is expedited. Allocating data carrying capacity on a particular user line can be based on the priority which is assigned to data packets which are to be sent over that particular user line. If these packets have a high priority, a high data carrying capacity should be allocated to the corresponding user line. This can be done by temporarily modifying the upstream/downstream bandwidth ratio to allow the high priority packets to be sent quickly. Consequently the class where the high priority data packets where classified in, will be emptied more rapidly, leading to a shorter period of time that latency-sensitive packets must wait before it can depart from it's queue or class. Other parameters which can be taken into account for allocating data carrying capacity comprise among other the requested maximum latency for the premium service, the bandwidth requested by the service and the queue to which the premium service is classified. In the latter case, the queue length can be monitored and resources can be allocated such that the length of that particular queue is minimized.

According to another embodiment, the allocating unit is further configured for allocating different number of time division duplexing time slots such that delivery of high priority data packets to an according user of said plurality of users is expedited. Using this approach the number of time slots or symbols, allocated to downstream or upstream can be adapted (for all lines jointly) so as to prioritize downstream or upstream traffic.

According to another embodiment, the allocating unit is further configured for adapting vectoring operations such that delivery of high priority data packets to an according user of said plurality of users is expedited. Giving more vectoring resources to particular lines can increase the data rates of these lines. Depending on the traffic load one may prioritize particular lines by adapting the vectoring operations such that higher data rates apply to these lines.

According to another aspect of the invention there is provided a method for handling data flows, consisting of data packets, in an access network between at least one provider and a plurality of users. The proposed method comprises collecting information about data flows, which are to be established between said at least one provider and at least one user of said plurality of users, and classifying data packets within the data flows in at least two classes of data packets, based on content type. The method further comprises assigning a priority to data packets within one or both of the first and second classes of data packets, based on at least one user related property for each data packet destined to at least one user of the plurality of users. Subsequently, the method comprises allocating data carrying capacity of said user line, based on the assigned priority of the data packets that are to be sent over said user line.

According to an embodiment, the method further comprises scheduling the data packets from different classes, according to predetermined scheduling rules, into one first-in-first-out queue per corresponding user line.

According to a preferred embodiment, collecting information about data flows comprises analyzing headers of data packets within the data flows and acquiring therefrom information which is representative for connection and quality requirements of the data flows.

According to an embodiment, the information which is representative for connection and quality requirements of the data flows comprises content type, source and destination of the data packets within the data flows.

According to a further embodiment, the method further comprises looking up user related properties, such as subscription type or user specific policy, based on at least one of the content type, the source and the destination of the data packets.

According to an embodiment, allocating data carrying capacity comprises modifying upstream/downstream bandwidth ratio such that delivery of high priority data packets to an according user of said plurality of users is expedited.

According to an embodiment, allocating data carrying capacity comprises allocating different number of time division duplexing time slots such that delivery of high priority data packets to an according user of said plurality of users is expedited.

According to an embodiment, allocating data carrying capacity comprises adapting vectoring operations such that delivery of high priority data packets to an according user of said plurality of users is expedited.

According to yet another aspect of the invention, there is provided a multiple transceiver unit under control of a network controller, in combination configured for collecting information about data flows that are to be established between said at least one provider and at least one user of said plurality of users. They are further in combination configured for classifying data packets within the data flows in at least two classes of data packets, based on content type, and for assigning at least one of a higher and a lower priority to data packets within one or both of the first and second classes of data packets, based on at least one user related property for each data packet destined to at least one user of the plurality of users. The proposed combination is further configured for allocating data carrying capacity of said user line, based on the assigned priority of the data packets that are to be sent over said user line.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of systems and methods of the present invention. The above and other advantages of the features and objects of the invention will become more apparent and the invention will be better understood from the following detailed description when read in conjunction with the accompanying drawings, in which:
Figure 1 is a schematic drawing of an exemplary embodiment of a system for handling data flows, consisting of data packets, in an access network;
Figures 2A-2C schematically show examples of how data packets can be classified, queued and scheduled in embodiments of the invention;
Figure 3 schematically shows how different data carrying capacities can be allocated to different user lines; and
Figure 4 is a flowchart illustrating an embodiment of an exemplary method for handling data flows, consisting of data packets, in an access network;

### Description of embodiments

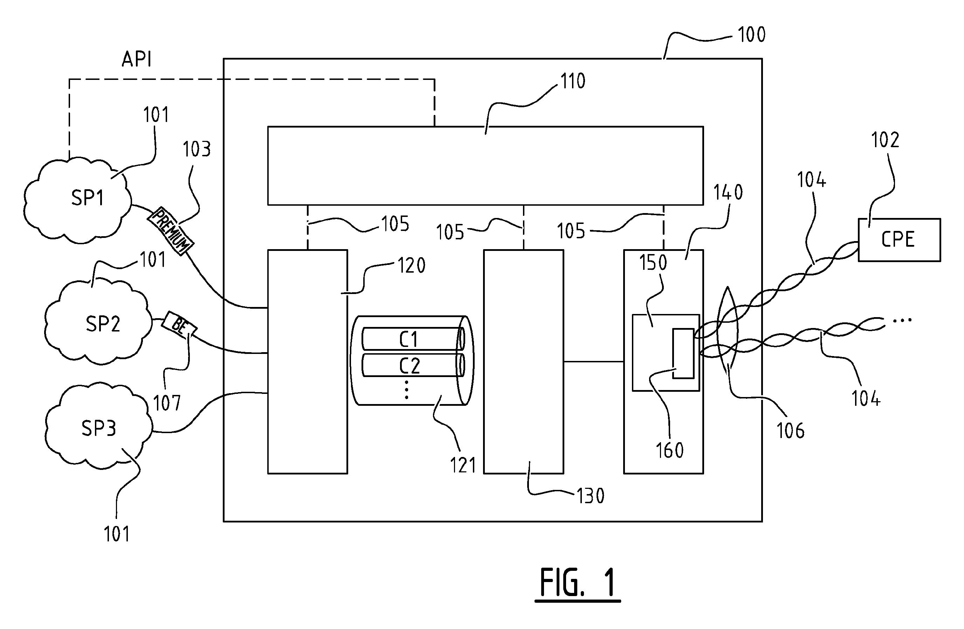

Figure 1 schematically shows a system 100 for handling data flows, consisting of data packets, in an access network between at least one provider 101 and a plurality of users 102. The system 100 comprises an information collecting unit 110 configured for collecting information about data flows, which are to be established between said at least one provider 101 and at least one user of said plurality of users 102, and a classifying unit 120 configured for classifying data packets within the data flows in at least two classes C1, C2 of data packets, based on content type, as indicated in figure 1 at component 121.

The system further comprises a priority assigning unit 130 configured for assigning at least one of a higher and a lower priority to data packets within one or both of the first and second classes of data packets, C1 and C2 respectively, based on at least one user related property for each data packet destined to at least one user of the plurality of users 102. Finally, the system comprises an allocation unit 160 configured for allocating data carrying capacity of the user line 104, based on the assigned priority of the data packets that are to be sent over the user line 104. The system can further comprise a scheduling unit 140 configured for scheduling the data packets from different classes, for example classes C1 and C2, according to predetermined scheduling rules, into one first-in-first-out queue per corresponding user line 104.

The revealed system uses information about for example premium traffic with the aim to prioritize its delivery over the last mile copper access medium 104. The information gathering process is amongst other illustrated in Figure 1. When a premium (video) service 103 is being established between a first service provider (SP1) and a customer connected to the customer premises equipment (CPE), it communicates with the information collecting unit 110, which for example can be a software defined network (SDN) controller. The SDN controller then receives and interprets the connection and quality requirements requested between the service provider 101 and end user 102. Subsequently the SDN controller establishes a data path through the access and aggregation network, for forwarding the premium traffic flow. Treatment per flow allows identifying premium traffic packets within a best effort traffic class. An alternative is using a separate VLAN for the entire best effort traffic volume. If traffic is encapsulated in VLAN the access node however will not know wherefrom it originates and will not be able to identify the presence of premium content. In this embodiment a standard protocol, OpenFlow 105, is used to carry information on the aspects of traffic forwarding such as assignment of flows on queues in the marking, classification and queuing (MCQ) block or classification, queuing and scheduling (CQS) block, which blocks can be located in the classifying unit 120, priority assigning unit 130 and/or the scheduling unit 140. OpenFlow can further communicate the forwarding decisions to the corresponding network devices such as the border network gateway (BNG) which may house the classifying unit 130, access node which may house the priority assigning unit 130, and the remote node which may house a multiple transceiver unit 150 with according allocating unit 160, such as a DRA element. In this example a premium video service 103 from a first service provider (SP1) and other best effort video 107 from a second service provider (SP2) are set up to the same subscriber (CPE) and will compete for resources. Chances are that they both end up in the same class for best effort video, and thus the premium service could be blocked by the best effort video. However, since the system of the invention takes into account customer related properties, which could be for example a premium subscription, the premium video can be identified during its flow through the network. The premium data will not only be identified, the premium data will also receive prioritized treatment, since information of the premium data and possibly its position in the network (which class or which queue or on which user line) is also provided to the allocation unit. The allocation unit will then use this information to allocate resources accordingly (by prioritizing user lines which carry premium traffic, or by monitoring certain queues or classes which contain premium traffic) such that the requirements concerning maximum latency and minimum bitrate for the premium service are fulfilled. In the event of a user line being prioritized, all traffic (premium data and best effort data) benefit from the prioritization.

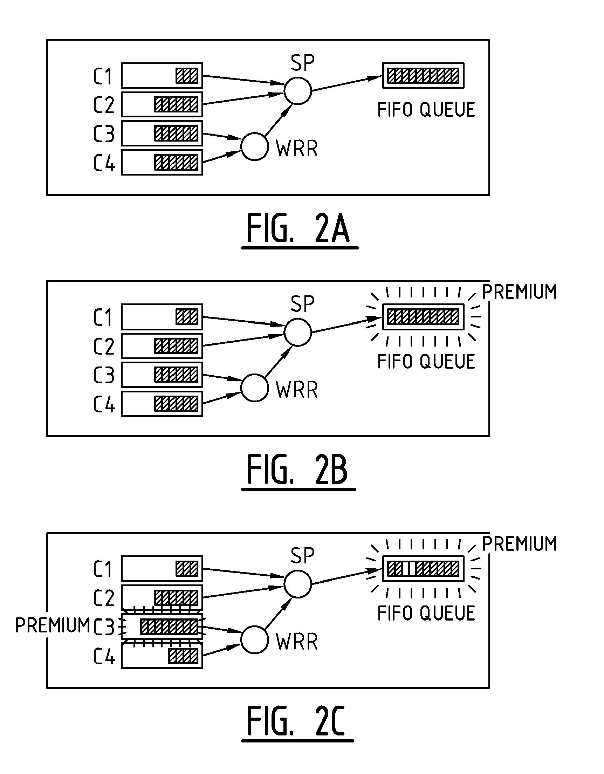

In figures 2A-2C, four examples of a classifying, queuing and scheduling action of the remote node in a typical implementation of an access node are illustrated. Four classes (C1, C2, C3, C4) are arranged in a hierarchical scheduling fashion, with the first two queues being handled with strict priority (SP) and remaining two with weighted round robin (WRR) mechanism. Packets of the same class share the same queue (C1-C4, respectively) and are scheduled according to the scheduler rules into a first-in first-out (FIFO) queue, followed by a line transceiver unit 151, within the multiple transceiver unit 150. In an exemplary embodiment, the four classes C1-C4 may correspond to the following services: voice (C1), managed video (C2), controlled load (C3) and best effort (C4). It can be envisaged that over-the-top services end up in controlled load or best effort classes.

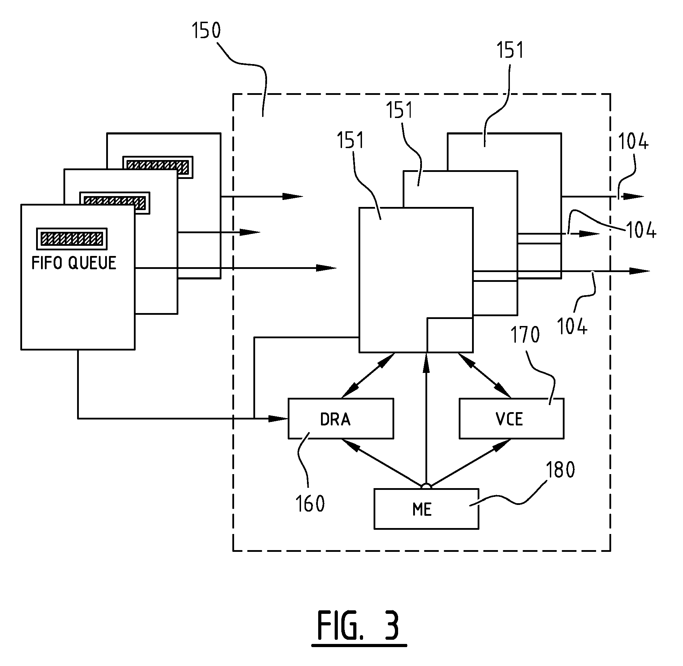

Figure 3 illustrates that one FIFO queue is entering the multiple transceiver unit 150 per subscriber line 104. In the proposed system, the information about the premium flow presence and properties is also communicated to the allocation unit 160, which, in this embodiment is a dynamic resource allocation (DRA) element 160, residing in the multiple transceiver unit 150 of the remote node, which could also house the scheduling unit 140. The allocation unit 160 is responsible for allocating the data carrying capacity to each individual copper link 104 belonging to the vectoring group 106. In the proposed system, the DRA element 160 is augmented with information about the presence of premium flow being requested by a user connected to a particular CPE 102 or access line 104. The information provided to the allocation unit 160 by the information collection unit 110 may include, but is not limited to:
- the access line requesting the premium service
- the class (C1-4) or queue to which the premium service is classified
- the requested maximum latency for the premium service
- the bandwidth requested by the service.

With the knowledge of premium traffic being present on a given user line, the DRA element 160 may give preference to that line resulting in higher transmission speed on that line. This can, for instance, be achieved by (but is not limited to) modifying the upstream/downstream bandwidth ratio, the number of allocated time division duplexing (TDD) time slots or the vectoring operations of the VCE 170. Consequently the best effort queue will be emptied more rapidly, leading to shorter period of time that the latency-sensitive packet must wait before it departs the queue. This priority indication is illustrated in figure 2B with the FIFO queue being indicated as premium.

In another situation, illustrated in figure 2C, based on the additional knowledge of the class to which the premium traffic is classified, the DRA can monitor the length of the given class or queue on the given user line and allocate resources such that the length of this class or queue is minimized. In this example there is a priority indication for both the class (C3) and the FIFO queue.
Besides a DRA 160 and VCE 170, the multiple transceiver unit 150, can further comprise a management entity (ME) 180, which can impose bounds to the DRA 160 that are related to the allocation of upstream and downstream traffic, such as the upstream/downstream ratio, service level agreements (SLA), etc..
In yet another embodiment, additional knowledge of the service requirements (e.g. maximum latency) can lead the DRA to allocating the capacity to ensure that the particular queue of the particular line is no longer than X bytes, X being determined by packet departure speed and service latency requirements.
In a further embodiment, statistics are kept for all flows on all user lines, such that conclusions can be drawn about the short-term and long-term capacity requirements between different lines. This approach serves as another constraint for setting up the DRA 160 and the VCE 170.
In all demonstrated embodiments, the access line resources are balanced between the users with and without premium services, while guaranteeing the minimum connectivity requirements.

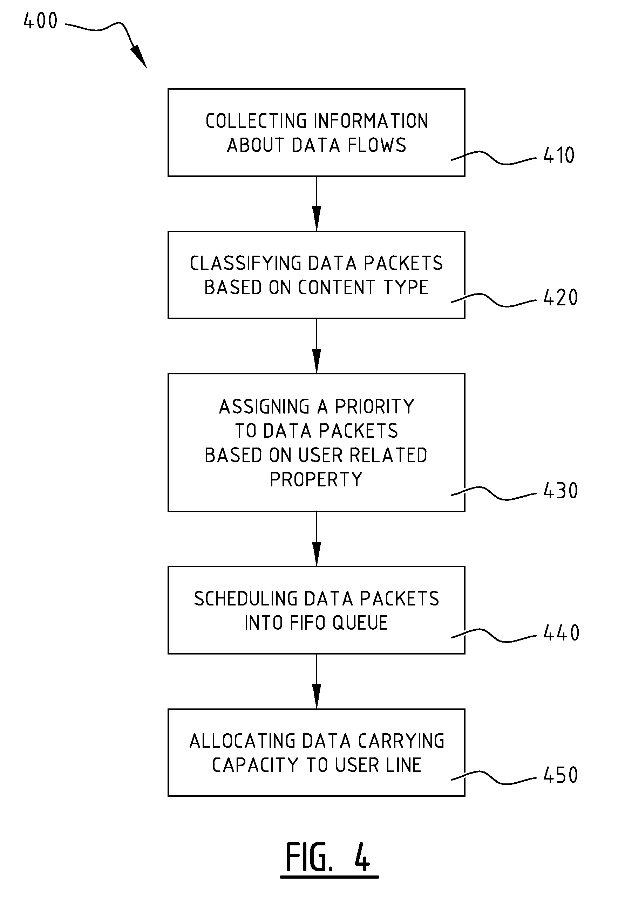

The flowchart in figure 4 illustrates schematically a method 400 for handling data flows, consisting of data packets, in an access network between at least one provider and a plurality of users. The proposed method comprises a first step 410 of collecting information about data flows, which are to be established between said at least one provider and at least one user of said plurality of users, and a second step 420 of classifying data packets within the data flows in at least two classes of data packets, where a first class represents higher priority data packets and a second class represents lower priority data packets, based on content type. The method further comprises a step 430 of assigning a priority to data packets within one or both of the first and second classes of data packets, based on at least one user related property for each data packet destined to at least one user of the plurality of users. Subsequently, the method comprises a final step 450 of allocating data carrying capacity to the user line, based on the assigned priority of the data packets that are to be sent over the user line.
The method can further comprise a step 440 of scheduling the data packets from different classes, according to predetermined scheduling rules, into one first-in-first-out queue per corresponding user line.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "modules" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims. Other possible embodiments according to the present invention are by no means excluded from the scope of the present invention according to the appended claims, in particular the appended independent claims, as a consequence of the above description of more detailed and particular embodiments.

## Claims

1. A system for handling data flows, consisting of data packets, in an access network between at least one provider and a plurality of users, comprising:
- an information collecting unit configured for collecting information about data flows, which are to be established between said at least one provider and at least one user of said plurality of users;
- a classifying unit configured for classifying data packets within the data flows in at least two classes of data packets, based on content type;
- a priority assigning unit configured for assigning at least one of a higher and a lower priority to data packets within at least one of the first and second classes of data packets, based on at least one user related property for each data packet destined to at least one user of the plurality of users;
- an allocation unit configured for allocating data carrying capacity of said user line, based on the assigned priority of the data packets that are to be sent over said user line.

2. The system according to claim 1, further comprising a scheduling unit which is configured for scheduling the data packets from different classes, according to predetermined scheduling rules, into one first-in-first-out queue per corresponding user line.

3. The system according to claim 1 or 2, wherein the information collecting unit is further configured for analyzing headers of data packets within the data flows and acquiring therefrom information which is representative for connection and quality requirements of the data flows.

4. The system according to claim 3, wherein the information which is representative for connection and quality requirements of the data flows comprises content type, source and destination of the data packets within the data flows.

5. The system according to claim 4, further comprising a look-up unit configured for looking up user related properties such as subscription type or user specific policy, based on at least one of the content type, the source and the destination of the data packets.

6. The system according to any one of the claims 1 to 5, wherein the allocating unit is further configured for modifying upstream/downstream bandwidth ratio such that delivery of high priority data packets to an according user of said plurality of users is expedited.

7. The system according to any one of the claims 1 to 6, wherein the allocating unit is further configured for allocating different number of time division duplexing time slots and/or adapting vectoring operations, such that delivery of high priority data packets to an according user of said plurality of users is expedited.

8. A method for handling data flows, consisting of data packets, in an access network between at least one provider and a plurality of users, comprising:
- collecting information about data flows, which are to be established between said at least one provider and at least one user of said plurality of users;
- classifying data packets within the data flows in at least two classes of data packets, based on content type;
- assigning at least one of a higher and a lower priority to data packets within at least one of the first and second classes of data packets, based on at least one user related property for each data packet destined to at least one user of the plurality of users;
- allocating data carrying capacity of said user line, based on the assigned priority of the data packets that are to be sent over said user line.

9. The method according to claim 8, further comprising scheduling the data packets from different classes, according to predetermined scheduling rules, into one first-in-first-out queue per corresponding user line.

10. The method according to claim 8 or 9, wherein collecting information about data flows comprises analyzing headers of data packets within the data flows and acquiring therefrom information which is representative for connection and quality requirements of the data flows.

11. The method according to claim 10, wherein the information which is representative for connection and quality requirements of the data flows comprises content type, source and destination of the data packets within the data flows.

12. The method according to claim 11, further comprising looking up user related properties such as subscription type or user specific policy, based on at least one of the content type, the source and the destination of the data packets.

13. The method according to any one of the claims 8 to 12, wherein allocating data carrying capacity comprises modifying upstream/downstream bandwidth ratio such that delivery of high priority data packets to an according user of said plurality of users is expedited.

14. The method according to any one of the claims 8 to 13, wherein allocating data carrying capacity comprises allocating different number of time division duplexing time slots and/or adapting vectoring operations, such that delivery of high priority data packets to an according user of said plurality of users is expedited.

15. A multiple transceiver unit under control of a network controller, in combination configured for:
- collecting information about data flows that are to be established between said at least one provider and at least one user of said plurality of users;
- classifying data packets within the data flows in at least two classes of data packets, based on content type;
- assigning at least one of a higher and a lower priority to data packets within at least one of the first and second classes of data packets, based on at least one user related property for each data packet destined to at least one user of the plurality of users;
- allocating data carrying capacity of said user line, based on the assigned priority of the data packets that are to be sent over said user line.

## Amended claims

### Amended claims in accordance with Rule 137(2) EPC.

1. A system (100) for handling data flows, consisting of data packets, in an access network between at least one provider and a plurality of users, comprising:
- an information collecting unit (110) configured for collecting information about data flows, which are to be established between said at least one provider and at least one user of said plurality of users;
- a classifying unit (120) configured for classifying data packets within the data flows in at least two classes of data packets, based on content type;
- a priority assigning unit (130) configured for assigning at least one of a higher and a lower priority to data packets within at least one of the first and second classes of data packets, based on at least one user related property for each data packet destined to at least one user of the plurality of users; **characterized in that** the system comprises:
- an allocation unit (160) configured for allocating data carrying capacity of said user line, based on the assigned priority of the data packets that are to be sent over said user line.

2. The system (100) according claim 1, wherein the allocating unit (160) is further configured for allocating different number of time division duplexing time slots and/or adapting vectoring operations.

3. The system (100) according to claim 1 or 2 wherein delivery of high priority data packets to an according user of said plurality of users is expedited.

4. The system (100) according to any one of the previous claims, further comprising a scheduling unit (140) which is configured for scheduling the data packets from different classes, according to predetermined scheduling rules, into one first-in-first-out queue per corresponding user line.

5. The system (100) according to any one of the previous claims, wherein the information collecting unit (110) is further configured for analyzing headers of data packets within the data flows and acquiring therefrom information which is representative for connection and quality requirements of the data flows.

6. The system (100) according to claim 5, wherein the information which is representative for connection and quality requirements of the data flows comprises content type, source and destination of the data packets within the data flows.

7. The system (100) according to any one of the claims 1 to 6, wherein the allocating unit (160) is further configured for modifying upstream/downstream bandwidth ratio such that delivery of high priority data packets to an according user of said plurality of users is expedited.

8. A method (400) for handling data flows, consisting of data packets, in an access network between at least one provider and a plurality of users, comprising:
- collecting information (410) about data flows, which are to be established between said at least one provider and at least one user of said plurality of users;
- classifying data packets (420) within the data flows in at least two classes of data packets, based on content type;
- assigning (430) at least one of a higher and a lower priority to data packets within at least one of the first and second classes of data packets, based on at least one user related property for each data packet destined to at least one user of the plurality of users; **characterized in that** the method comprises:
- allocating (450) data carrying capacity of said user line, based on the assigned priority of the data packets that are to be sent over said user line.

9. The method (400) according to claim 8, wherein allocating (450) data carrying capacity comprises allocating different number of time division duplexing time slots and/or adapting vectoring operations.

10. The method (400) according to claim 8 or 9, further comprising expediting delivery of high priority data packets to an according user of said plurality of users.

11. The method (400) according any one of the claims 8 to 10, further comprising scheduling (440) the data packets from different classes, according to predetermined scheduling rules, into one first-in-first-out queue per corresponding user line.

12. The method (400) according to any one of the claims 8 to 11, wherein collecting information (410) about data flows comprises analyzing headers of data packets within the data flows and acquiring therefrom information which is representative for connection and quality requirements of the data flows.

13. The method (400) according to claim 12, wherein the information which is representative for connection and quality requirements of the data flows comprises content type, source and destination of the data packets within the data flows.

14. The method (400) according to any one of the claims 8 to 13, wherein allocating (450) data carrying capacity comprises modifying upstream/downstream bandwidth ratio such that delivery of high priority data packets to an according user of said plurality of users is expedited.

15. A multiple transceiver unit (150) under control of a network controller, in combination configured for:
- collecting information (410) about data flows that are to be established between said at least one provider and at least one user of said plurality of users;
- classifying data packets (420) within the data flows in at least two classes of data packets, based on content type;
- assigning (430) at least one of a higher and a lower priority to data packets within at least one of the first and second classes of data packets, based on at least one user related property for each data packet destined to at least one user of the plurality of users;
- allocating (450) data carrying capacity of said user line, based on the assigned priority of the data packets that are to be sent over said user line.
